# EUROPEAN PATENT SPECIFICATION

(11) **EP 1 115 012 B1**
(45) Date of publication and mention of the grant of the patent: **26.03.2003**
(21) Application number: 00400037.8
(22) Date of filing: 06.01.2000
(51) Int. Cl.: G02B 6/12, G02B 6/42

(54) **Waveguide with tap recess for optical monitoring in photonic devices**
Wellenleiter mit vertiefter Anzapfstelle für die optische Überwachung von optischen Bauelementen
Guide d'ondes optiques avec prise en creux pour surveillance optique de composants photoniques

(43) Date of publication of application: 11.07.2001
(73) Proprietor: Corning Incorporated, Corning, New York 14831 (US)
(72) Inventor: Beguin, Alain Marcel, Corning Incorporated, Corning, NY 14831 (US); Hiller, Dietmar, Corning Incorporated, Corning, NY 14831 (US); Fondeur, Barthelemy L.B.M., Corning Incorporated, Corning, NY 14831 (US); Kamoun, Moez, Corning Incorporated, Corning, NY 14831 (US); Piehler, Julia Alyson, Corning Incorporated, Corning, NY 14831 (US); Sutherland, James Scott, Corning Incorporated, Corning, NY 14831 (US)
(74) Representative: Grunfeld, David Peter

(56) References cited:
- EP-A- 0 362 789
- EP-A- 0 469 793
- GB-A- 2 315 595
- US-A- 5 170 448
- US-A- 5 259 044
- US-A- 5 881 199
- PATENT ABSTRACTS OF JAPAN vol. 006, no. 100 (P-121), 9 June 1982 (1982-06-09) & JP 57 034503 A (FUJITSU LTD), 24 February 1982 (1982-02-24)
- PATENT ABSTRACTS OF JAPAN vol. 010, no. 341 (P-517), 18 November 1986 (1986-11-18) & JP 61 144608 A (OMRON TATEISI ELECTRONICS CO), 2 July 1986 (1986-07-02)

## Description

### 1. Field of the Invention

The present invention relates generally to improvements to the field of planar photonic devices, and more particularly to aspects of systems and methods for optical monitoring in photonic devices.

### 2. Technical Background

In a planar photonic device, it is desirable to integrate numerous discrete optical components into a single, compact package in order to reduce the packaging cost and space consumption of the device. Optical signals within these devices are carried by an array of individual waveguides that have been fabricated on a planar substrate sealed within the package.

In certain planar photonic devices, such as some devices used in wavelength division multiplexing (WDM), or other arrayed devices, it is desirable to perform monitoring of the optical signals carried by individual waveguides within the sealed package. However, because of the topological constraints of the device, it is difficult to provide access to the individual waveguides for monitoring purposes in a compact fashion without interruption of the device's function or significant loss of optical power. The problem of monitoring individual waveguides becomes increasingly difficult as planar photonic devices become more and more complex.

In a planar photonic device, it is desirable for a number of discrete optical components and waveguides to be integrated into a single package. These components and waveguides are formed on a planar substrate in a series of manufacturing steps. The resulting device can be significantly more compact than a comparable device constructed from discrete components. Such a device also typically exhibits potentially higher reliability, lower manufacturing costs, and lower optical signal degradation.

Certain planar photonic devices have been developed for systems using wavelength division multiplexing (WDM). In WDM, the total rate of data transmission is increased by transmitting multiple data streams simultaneously along a single optical fiber. Each data stream has its own unique wavelength. The data streams are combined into a multiplexed data signal. After transmission, the combined data signal is then demultiplexed back into individual data streams.

In a transmission system using WDM, it is frequently necessary to monitor, condition, and perform operations individually on different wavelengths. As the number of wavelengths used in these systems increases, and the operations performed on the wavelengths become more complex, the amount of equipment needed for the system increases also. This increasing complexity has motivated efforts to decrease the volume occupied by each component of the optical transmission equipment.

In a planar photonic device, waveguides within the device can be fabricated in arrays on the device's planar substrate, so that each one of the multiple wavelengths can be operated upon individually within the same contiguous planar array. Components that perform different optical functions can alternatively be hybridized or integrated together into a single planar photonic device. This integration reduces the volume required for packaging a separate device for each optical function and/or each wavelength. For example, a planar optical component may include an integrated demultiplexer for demultiplexing a multiplexed input signal into individual signals for processing and/or an integrated multiplexer or combiner for combining the processed individual signals into a multiplexed signal, integrated or hybridized with other functions, such as power equalization or monitoring.

In WDM and other applications, it is frequently necessary to perform optical monitoring at the beginning, end, and in the middle of such components, both for the control of the component itself, and of the optical transmission system as a whole. However, in planar photonic devices, especially ones that are arrayed and/or contain multiple integrated functions, access to the signal without interruption of its function can be difficult.

The reason that optical monitoring is problematic is the topology of the array of waveguides within the planar photonic device. Because of the manufacturing techniques used, each waveguide in the array of waveguides typically must lie in the same plane, parallel to the plane defined by the device's substrate. In addition, the optical waveguides on the substrate cannot be angled or curved too sharply without resulting in bending losses. Further, if the optical waveguides cross each other, this potentially creates high loss and/or unacceptably high cross talk among waveguides.

In one approach, tap-waveguides are used to monitor optical signals traveling through the array of waveguides. As its name implies, a tap-waveguide is a "spur" waveguide intersecting, or evanescently coupling with, a through-waveguide that taps off a small portion of the optical signal carried by the through-waveguide. The tapped portion of the signal is then carried to a photodiode or other sensing device. However, given the constraints that all waveguides, including tap-waveguides, lie in the same plane, that the waveguides may not be angled or curved too sharply, and that the waveguides may not cross each other, the use of tap-waveguides becomes increasingly problematic as planar photonic devices become more and more complex.

US 5170448 describes a method for collecting light from a polymer waveguide by placing a faceted groove in the waveguide, thereby reflecting a portion of the light that is propagating through the waveguide from the facet at an oblique angle.

GB 2315595 describes a device for re-directing light from a waveguide on a chip comprising a layer of silicon separated from a substrate by an insulator layer, the device comprising a reflective facet formed in a recess in the silicon layer, the facet being positioned to receive light from a waveguide formed in or at the level of the silicon layer and angled so as to re-direct the light in a desired direction.

These documents teach means for collecting and monitoring light from a waveguide by re-directing light out of the plane of the waveguide. However, there remains a need for a variable optical attenuator which can be integrated within a compact and low-loss planar photonic device.

### SUMMARY OF THE INVENTION

This need is addressed by the present invention. A first embodiment of the invention provides a variable optical attenuator comprising a through-waveguide for carrying an optical signal. The through-waveguide forms a Mach-Zehnder interferometer having upper and lower arms, at least one of the arms of the Mach-Zehnder interferometer having a heating pad mounted proximate thereto to thermo-optically induce a phase mismatch between the respective portions of the optical signal carried by the upper and lower arms. A tap-waveguide is coupled to the through-waveguide, the tap-waveguide diverting a portion of the optical signal to a tap receptacle disposed in the path of the tap-waveguide such that the portion of the optical signal diverted into the tap-waveguide enters the tap receptacle. The tap receptacle has a mouth proximate to an exterior surface of the variable optical attenuator, and a light sensor is mounted proximate to the mouth of the tap receptacle for monitoring light that has entered the tap receptacle.

A more complete understanding of the present invention, as well as further features and advantages of the invention, will be apparent from the following detailed description and the accompanying drawings.

### BRIEF DESCRIPTION OF THE DRAWINGS

Fig. 1 shows a cross sectional side view of a tap receptacle monitoring system according to the present invention.
Fig. 2 shows a diagram of a power equalizer embodying the monitoring system shown in Fig. 1, according to the present invention.
Fig. 3 shows a flowchart of a method for constructing a planar photonic device embodying the present invention, such as that shown in Fig. 1 which can be assembled to form the equalizer of FIG. 2.
Figs. 3A-H show a rough cross-sectional side representation of a planar photonic device being constructed according to the method shown in Fig. 3, according to the present invention.
Fig. 4 shows an underside view of an elongated tap receptacle 20 of FIG. 1, according to the present invention.
Fig. 5 shows a top-side sketch of the elongated tap receptacle 20 of FIG. 4, according to the present invention.
Figs. 6A-C show some of the steps in etching gratings onto a through-waveguide before overcladding to form a planar photonic device, according to the present invention.
Figs. 7A-C show some of the steps in etching gratings onto a through-waveguide after etching of the overcladding to form the receptacle 620 for the planar photonic device, according to the present invention.

### DETAILED DESCRIPTION

The present invention now will be described more fully with reference to the accompanying drawings, in which currently preferred embodiments of the invention are shown. However, the described invention may be embodied in various forms and should not be construed as limited to the exemplary embodiments set forth herein. Rather, these representative embodiments are described in detail so that this disclosure will be thorough and complete, and will fully convey the structure, operation, functionality and potential scope of applicability of the invention to those skilled in the art.

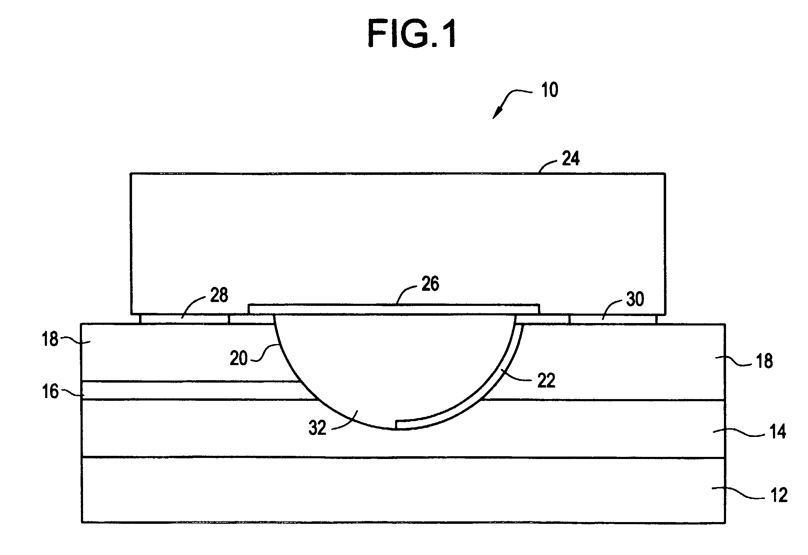

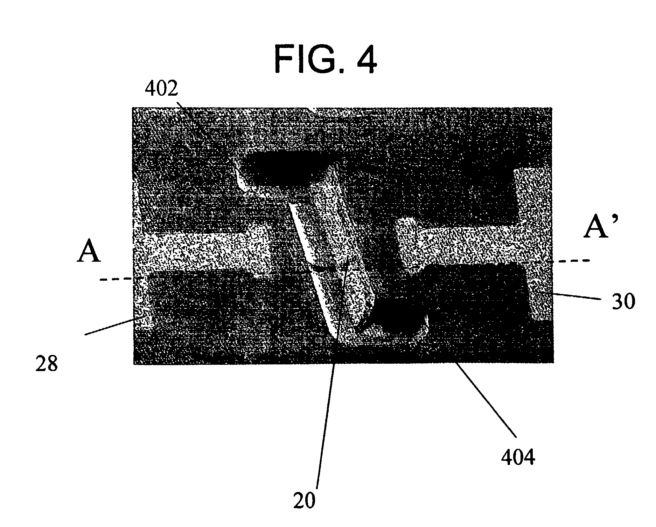

Fig. 1 shows a cross section view A-A' of Fig. 4 of the tap receptacle monitoring system part of the present invention. The device 10 includes a planar substrate 12, a buffer layer 14, a tap-waveguide 16, an overclad layer 18, a tap receptacle 20, a tap receptacle mirror 22, a light sensor in the preferred form of a photodiode 24 with an active region 26, photodiode soldering contacts 28, 30, and an index-matched adhesive infill 32.

A wafer preferably in the form of a SiO2/Si motherboard is fabricated starting with a planar substrate 12. If necessary, the under layer or "underclad" 14, which is manufactured from a material with a low absorption at the signal wavelength, is laid on top of the substrate 12. Then, the waveguides within the device, including tap-waveguide 16, are formed on top of the underclad 14, to provide paths for the propagation of optical signals. The waveguides are sealed under the over layer or "overclad" 18, which has a lower refractive index than the waveguides and typically has approximately the same index of refraction as the underclad, if there is one. The underclad 14, waveguide 16, and overclad 18 are fabricated from doped silica. The layers are defined by the level of doping, which is used to control the index of refraction of each layer.

In order to gain access to the end of tap-waveguide 16 for monitoring purposes, a portion of the wafer is removed, such as by etching, to form the tap receptacle 20. As shown in Fig. 1, the tap receptacle 20 has a substantially hemispherical or "bowl"-like profile, and extends from the upper surface of the overclad 18, through the overclad 18, across the tap-waveguide 16, and down into the underclad 14. The tap-waveguide 16 terminates at the tap receptacle 20. Thus, the tap receptacle 20 interrupts the data stream carried by the tap-waveguide 16 to diffuse light from it into the interior of the tap receptacle 20.

The tap waveguide 16 taps off a small fraction of light, called the "tap signal," from the main portion of the signal traveling on a through-path or through-waveguide of the device, called the "through signal," for the purposes of monitoring. In a planar photonic device, this may be achieved in various ways with only a small loss of signal intensity and negligible other adverse effects on the through signal. In Fig. 1, for example, the tap-waveguide 16 crosses the through-waveguide and couples some power from the through signal. Alternatively, light is tapped off from a through-waveguide by a tap-waveguide that evanescently couples some power from the through signal in the through-waveguide.

It would also be within the scope of the present invention to form a tap receptacle directly above the through-waveguide, without fully interrupting the through waveguide. In this case, the tap receptacle would evanescently couple a fraction of the light from the through signal. The amount of light coupled into the tap receptacle would depend on the depth and length of the tap receptacle. This latter arrangement has the advantage of eliminating the tap-waveguide entirely.

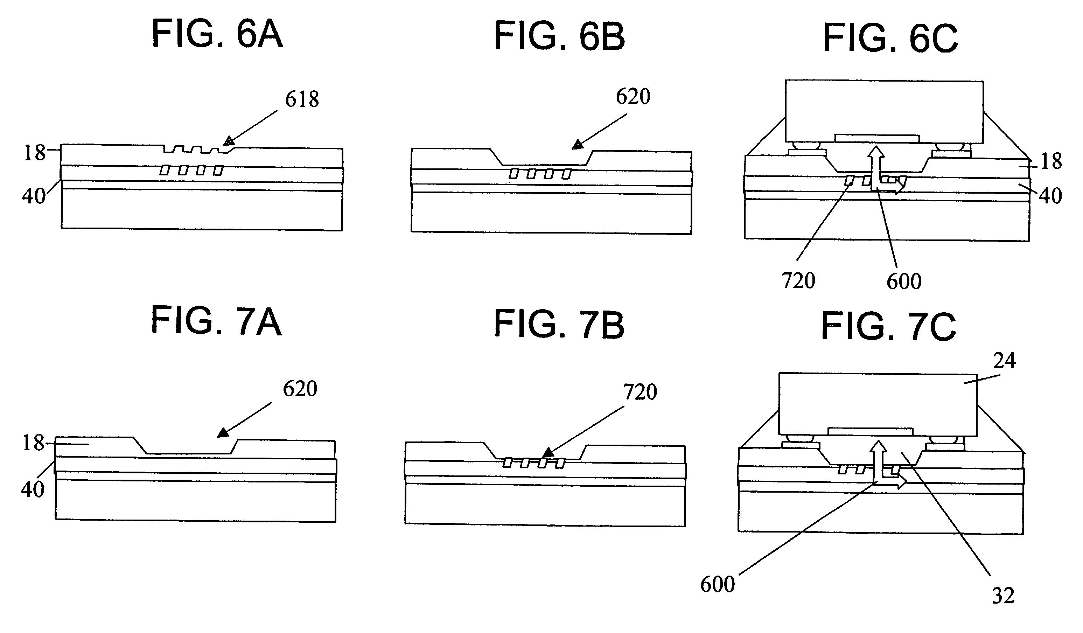

In the tap of Figs. 6-7, light 600 is tapped off by gratings 720 disposed between the overclad layer 18 and the through-waveguide or planar waveguide 40. These gratings 720 couple some power from the through signal to the photodiode 24. Rather than using a receptacle in the shape of a bowl having a circular cross section and having a mirror as part of its interior surface, a grating 720 may be manufactured above the through-waveguide 40, coupling out a controlled fraction of the light. In this case, the receptacle will have slanted, slightly circular, or any other types of side-walls after etching to form a cavity 620 for allowing the underfill of the photodiode with the infill material 32.

The infill material 32, preferably a liquid glue, is used again for index matching and mechanical strengthening of the photodiode attachment and also to remove any potential waves 618 in the overclad 18. The gratings 720 can be etched in the tap waveguide or in the through waveguide 40. Referring to Figs. 6A-C, the gratings 720 can be etched before the overclad layer 18 is deposited. A receptacle in the shape of a bowl or any other type of cavity 620 is then etched in Fig. 6B to etch-out the overcladding waves 618 due to the prior grating step in Fig. 6A. Referring to Fig. 6C, the photodiode 24 is hybridized over the cavity 620. Hybridization includes the metallization mask design for mirrors, electrical lines or heating pads, the alignment and bonding of photodiodes, and glue deposition.

Alternatively, the gratings 720 can be etched after the bowl or cavity 620 etching in Figs. 7A-C.

Hence, the tap receptacle 20, in the form of a bowl or a cavity 620, may be formed using a number of different methods. For example, the tap bowl or receptacle 20 of Fig. 1 or the cavity 620 of Figs. 6-7 may be formed by etching away material through a mask that protects the surrounding material. This etching may be controllably and economically executed by the use of wet etching with a buffered hydrofluoric acid (HF) solution in the case of a guide in a SiO₂-based device, or potassium hydroxide (KOH) in a Si-based device. The use of a wet etching technique produces tap receptacles of an appropriate form in a low cost way. Alternatively, the process can be performed with a dry etching process, such as reactive ion etching. Also, the cavity or other hole may be formed by a physical process to remove material, such as ablation, cutting, grinding or drilling.

Referring back to FIG. 1, light exiting the tap-waveguide 16 into the interior of the tap receptacle 20 diverges and is reflected or scattered by the walls and floor of the tap receptacle. The hemispherical profile or circular cross-section of the trough-shape of the tap receptacle 20 causes the light collected in the tap receptacle 20 to be reflected upward, towards the upper surface of the wafer. Collection of the light into the photodiode's active region 26 may be enhanced by the deposition of a coating of reflective material into the tap receptacle 20 in order to form a mirror 22. In the present embodiment, gold (Au) is used for this purpose. Preferably, a sputtering deposition of gold and a thick photo-resist for the mirror patterning or mask design is used.

However, other materials such as aluminum (Al) and other deposition methods may also be used. The reflective surface is deposited using the techniques of sputtering or evaporation, for example, although other methods may be used. The coating can also function to reduce or prevent the light from coupling back into the planar device. As shown in Fig. 1, in the present embodiment, the coating is deposited on the side of the tap receptacle 20 opposite the direction from which the light has propagated to the tap receptacle 20. This can be accomplished, for example, by maintaining a particular orientation of the wafer in an evaporation chamber during the deposition of the reflective material, or by masking that portion of the tap receptacle for which it would be undesirable to have a highly reflective material.

The photodiode 24, or another type of light sensors, is mounted on top of the wafer to form the device 10 such that its active region 26 collects the light that is reflected or scattered upwards from the tap receptacle 20. A pair of electrical contacts, an n-contact 28 and a p-contact 30, are affixed to the upper surface of the wafer on either side of the mouth of the tap receptacle 20. These contacts may also serve the dual function of physically affixing the photodiode to the planar device. After the photodiode 24 is soldered or otherwise mounted into position, the tap receptacle 20 is filled with a transparent material, such as epoxy 32, with an index of refraction that is matched to that of the tap-waveguide 16. This insures that the light impinging upon the tap receptacle 22 will be diffused into the tap receptacle rather than being reflected down toward the substrate or elsewhere within the guiding layers.

The epoxy or other infill material 32 is preferably a liquid glue. Under filling of the photodiode is best done with a liquid material in order to ideally fill all of the bowl portion of the receptacle 20 without air bubbles. However, as long as the photodiode is surrounded by the glue or otherwise sufficiently attached, not all of the receptacle 20 needs to be underfilled with glue. The glue, used in this case is type EPO-TEK 353 ND available from Epoxy Technology, Inc. This liquid glue is chosen firstly as a good index matcher to avoid back reflections (the index of silica is around 1.46 and the index of this glue is 1.56). Secondly, this glue is enough of a runny liquid being less viscous than other glues. (Its viscosity at 23°C is between 3000 and 5000 cps compared with other glues: viscosity of about 48,000 cps for EPO-TEK 353ND-T for example). This viscosity insures that the glue spreading under the photodiode 24 will be complete and without bubbles. Thirdly, after curing this glue at 80°C, the strengthening of the photodiode attachment is ensured.

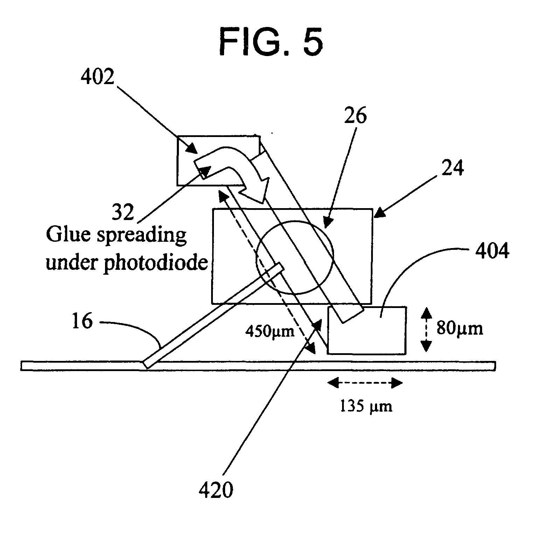

To further facilitate the spreading or tunneling of the infill material 32 underneath the photodiode 24, the receptacle can be modified from a substantially bowl shape to an elongated version. Figs. 4 and 5 show such a tap receptacle in the form of an elongated "Z"-shaped trough 420 having a circular cross-section body portion 20 underneath the light sensor and a pair of opposed end portions or tanks 402 and 404 disposed in-front and behind the light sensor 24 for spreading the infill material 32 through the "Z"-shaped trough 420. The bowl formed from the cross-section body portion 20 is then used to under-fill the photodiode 24 with the glue or other infill material 32. The circular cross-section body portion 20 is optionally made longer than a simpler bowl shape such that the glue or other infill material 32 can be tunneled or spread inside after the photodiode bonding, covering as much of the photodiode as needed and preventing air-bubbles at the same time. Optionally, the opposed end portions or tanks 402 and 404, having dimensions about 80um x 135um, can both or singly be present to provide a tank at the end(s) of this long bowl trough of about 450um to load the infill material 32. Preferably, the bowl would then be longer in the direction perpendicular to the tap-waveguide 16 as seen in FIG. 5.

Collection of light after scattering has the advantage of minimizing polarization dependence of the response of the photodiode. The photodiode may, if desired, be mounted with its active side facing upwards. In this case, an infrared (IR) transparent substrate would allow light to pass through the photodiode substrate to the photodiode's active region. Alternatively, the photodiode, or a portion of the photodiode, oriented active side up, down or laterally, may be placed inside the tap receptacle to capture the light before and/or after scattering from the receptacle walls.

Although in the present embodiment electrical connection to the photodiode is accomplished by soldering both the n- and p-contacts to electrical guides on the planar waveguide device, conductive adhesive may be used in place of solder. Alternatively, the electrical connection can be made by wire bonding. Thermo-compression can be used for the photodiode bonding. Furthermore, wire bonding equipment preferably deposit gold studs for the photodiode attachment.

It is also possible for the photodiodes to be electrically and/or mechanically attached to a separate carrier that is fixed over the planar waveguide device, such that each photodiode is aligned with respect to its respective tap receptacle. Furthermore, in order to reduce process steps, large numbers of photodiodes in the form of arrays may be mounted in a single step.

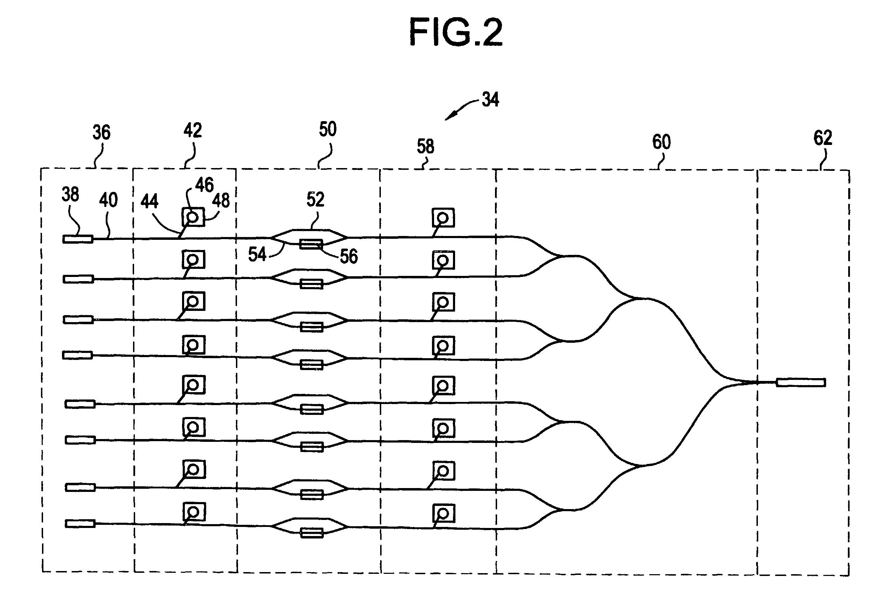

One application for the present invention is in the control of a planar array of variable optical attenuators (VOAs). A VOA can be easily and usefully integrated with other planar devices, such as splitters, combiners, wavelength division multiplexers and wavelength division demultiplexers. The attenuator may be a Mach-Zehnder interferometer, such as that shown in Fig. 2, discussed below, in which the intensity of the light passing through the attenuator may be variably attenuated by use of the thermo-optic effect. In this application, differentially heating one or both arms of the interferometer causes a phase mismatch in light traveling separately on the two arms of the interferometer, and attenuation of a portion of the total light at the point of recombination at the end of the interferometer. This attenuation is proportional to the amount of phase mismatch created, which is dependent on the change in the effective index caused by the differential heating.

One way of maintaining control of the attenuator is to measure light intensity before and/or after it has passed through the attenuator. By measuring the intensity of the tap signals and adjusting the VOA until the desired intensity is achieved, or by comparing the intensities of tap signals before and after the VOA and adjusting the VOA until the desired relative intensities are achieved, the VOA can be controlled. The VOA can be used, for example, for power equalization of the various wavelengths of a demultiplexed signal.

Fig. 2 shows a diagram of a planar photonic device 34 (not drawn to scale) embodying the present invention. The depicted device is a power equalizer, which can be used, for example, to interconnect space switching, wavelength selection, and wavelength conversion components in an optical signal processing system. It can be used in transmitter pre-emphasis and mixed data rate conditioning, as well as in a power equalizer in both in-line and receiver applications.

The input to the device is provided by optical fibers. In the present embodiment, the optical fibers are embedded into a block of materials in an array 36, in order to facilitate alignment and to secure the fiber to the planar substrate. The fiber block 36 receives eight separate signal inputs at different wavelengths on eight separate fibers 38 from a transmitter or demultiplexer. In an alternative embodiment, if desired, a demultiplexer switch or other device can be hybridized at the input to allow a further level of integration.

The eight fiber inputs are fed to eight planar waveguides 40 which carry the eight signals to a first array of eight taps 42 to monitor the signal in each. A fraction of each through-signal is coupled off from each planar waveguide using a tap-waveguide 44 intersecting through the through-waveguide at a Y-junction. This tapped light is then guided to, and terminates in, a tap receptacle 46, such as the one shown in Fig. 1. The tapped light is then scattered by the walls of the tap receptacle 46, and a portion of the scattered light is then collected by a photodiode 48 positioned over the opening of the tap receptacle 46. In the present embodiment, the active region of the photodiode faces down and covers the opening of the receptacle. The electrical connections of the n- and p-junctions of the photodiode are both on the same side of the photodiode as the active area. As described above and shown in Fig. 1, electrical connection is made with solder to the electrical guides on the surface of the component. The photodiode is also mechanically attached by means of solder to the surface of the component. The through-signals are then fed to an array of eight VOAs 50, which are used to adjust the power level of the particular wavelength signal passing through it. Each VOA in the array includes upper and lower arms 52, 54. One or both arms of each VOA 54 includes a heating pad 56, which is used to thermo-optically control the relative phase of the signal in the two arms. After the signals have passed through the array of VOAs, the signals are then fed to a second array of taps 58 for a second round of monitoring. As described above, a comparison of the measured levels of the optical signal in each through-waveguide before and after each respective VOA is used to determine the desired level of attenuation in the VOA. The eight separate signals are then fed to an 8x1 combiner 60 that is optically coupled to the through-waveguides, and the combined output is fed to a single optical fiber output 62.

The power equalizer shown in Fig. 2 may be modified in a number of respects without departing from the scope of the present invention. For example, a wavelength division multiplexer (WDM) may be used in place of the 8x1 combiner 60, or the combiner 60 may be removed entirely. Further, if desired, a wavelength division demultiplexer may be coupled to the planar waveguides 40, allowing the power equalizer to receive a multiplexed input on a signal optical fiber. In this embodiment, a splitter may be used in place of the demultiplexer.

As discussed above, a planar photonic device may potentially occupy significantly less space than a corresponding component constructed from discrete components. An exemplary implementation of the device 34, shown in Fig. 2, when packaged, would occupy only a fraction of the space occupied by a device with a similar function but constructed from discrete microoptic and/or other expanded beam devices. Further, the device shown in Fig. 2 only requires nine fiber routing connections, eight for the input and one for the output. If constructed from discrete fiber-coupled components, the device would require thirty-three connections.

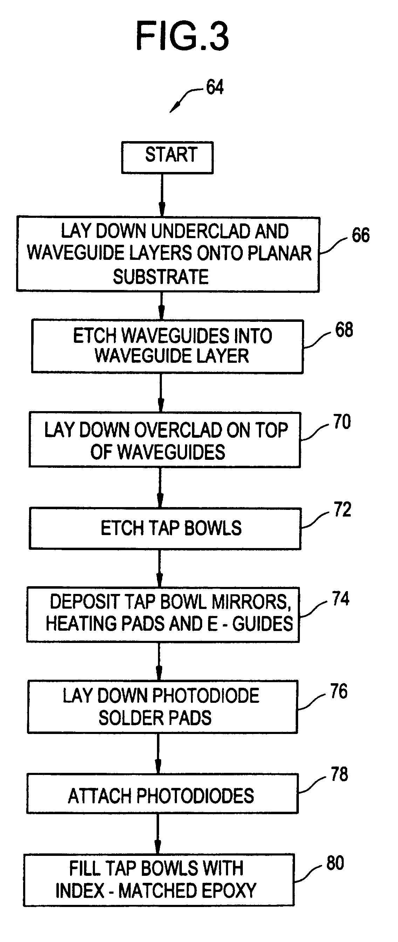

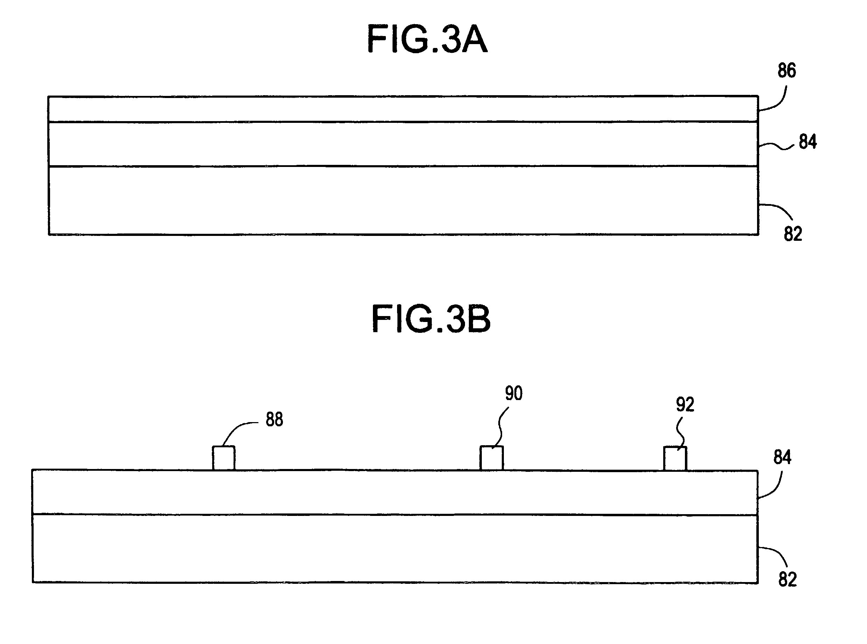

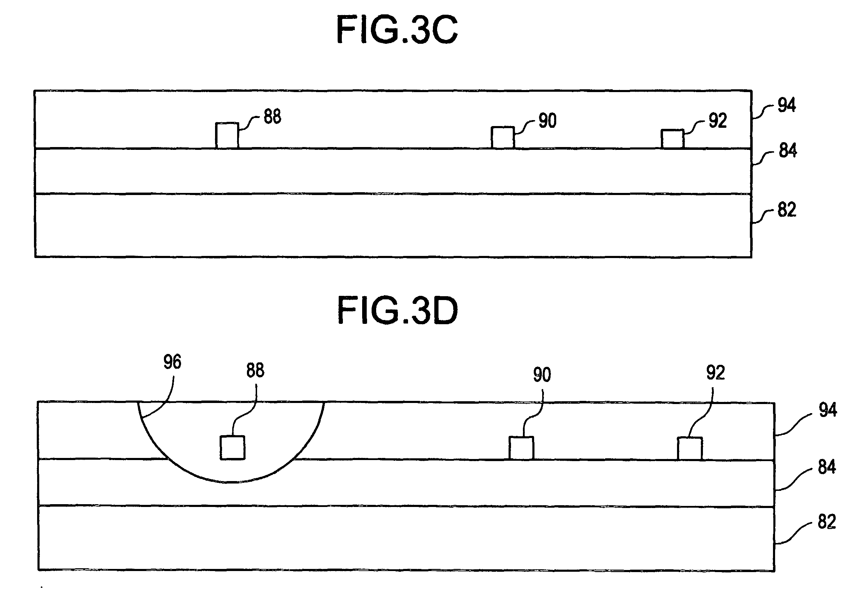

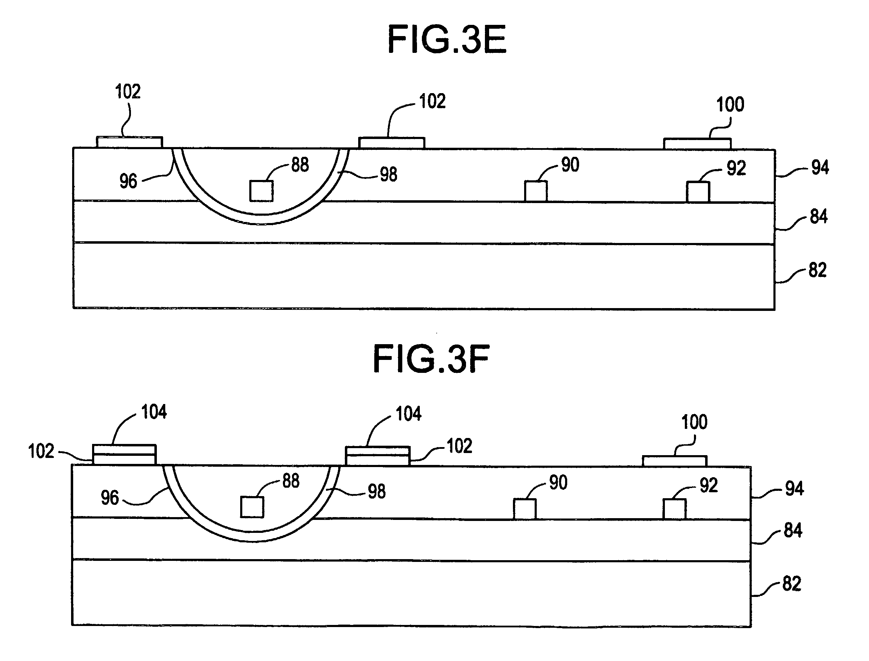

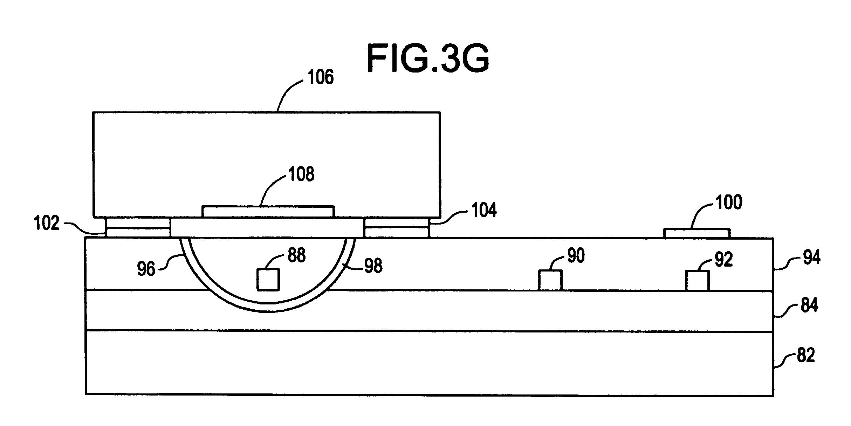

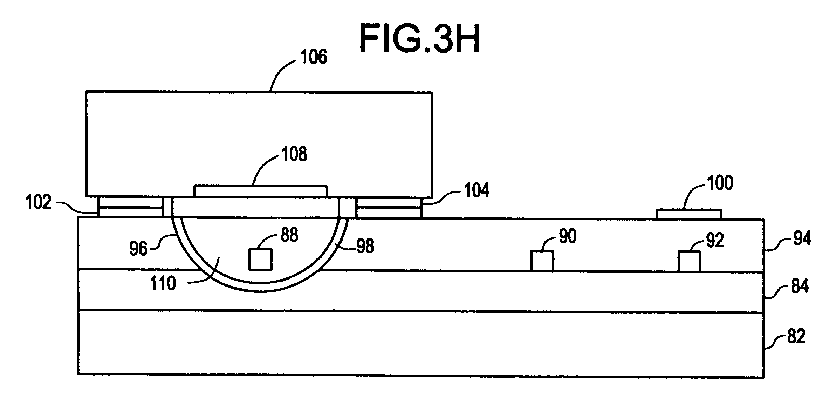

Fig. 3 shows a flowchart of a first embodiment of a method 64 of manufacturing the power equalizer shown in Fig. 2. Each step of the method is illustrated in Figs. 3A-H in a rough representation merely to show the steps and not the resultant structures, not drawn to scale or with cross-sectional accuracy. In a first step 66, as illustrated in Fig. 3A, the under layer or "underclad" 84 is deposited onto a planar substrate 82, and a continuous layer of waveguide material 86 is deposited on top of the underclad 84. In step 68, illustrated in Fig. 3B, the continuous layer of waveguide material 86 is used to fabricate all of the through-waveguides and tap-waveguides within the device by etching away unwanted portions of the material. Referring to Fig. 3B, the resulting waveguides are illustrated in a rough cross sectional representation along a meandering diagonal line across the top view of Fig. 2 to roughly represent as much of the structures as possible. For the purposes of illustration, there are shown in Fig. 3B a tap-waveguide 88 and the upper and lower arms 90, 92 of a VOA, such as one of the VOAs in array 50 shown in Fig. 2, described above.
In step 70, illustrated in Fig. 3C, the over layer or "overclad" is deposited over both the exposed underclad 84 and the etched waveguides 88, 90, 92.

In step 72, illustrated in Fig. 3D, a tap receptacle 96 is etched through the overclad 94, the tap-waveguide 88, and the underclad 84. As described above, each tap-waveguide 88 terminates in a tap receptacle 96. In step 74, illustrated in Fig. 3E, the metallic elements of the components are deposited. These include a tap mirror 98, a heating pad 100 for the VOA, and electrical guides 102 for the photodiode. In step 76, illustrated in Fig. 3F, the photodiode solder pads 104 are laid down in position over the electrical guides 102. In step 78, illustrated in Fig. 3G, photodiodes 106 are attached to the soldering pads 94, with their active regions 108 facing the mouth of the tap receptacle 96. In step 80, illustrated in Fig. 3H, the tap receptacle is filled with an infill material such as epoxy 110, which matches the refractive index of the tap guide. As discussed above, the use of a filler material with an appropriately chosen index of refraction insures that light entering the tap receptacle will be scattered in the correct direction.

It will be apparent to those skilled in the art that various modifications and variations can be made in the present invention without departing from the scope of the present invention. Thus, it is intended that the present patent covers the modifications and variations of this invention, provided that they come within the scope of the appended claims.

## Claims

1. A variable optical attenuator, comprising a through-waveguide (40) for carrying an optical signal, the through-waveguide forming a Mach-Zehnder interferometer having upper and lower arms (52, 54, 90, 92), at least one of the arms of the Mach-Zender interferometer having a heating pad (56, 100) mounted proximate thereto to thermo-optically induce a phase mismatch between the respective portions of the optical signal carried by the upper and lower arms (52, 54, 90, 92), **characterised by**:
a tap-waveguide (44, 16, 88) coupled to the through-waveguide (40), the tap-waveguide (44, 16, 88) diverting a portion of the optical signal to a tap receptacle (46, 20, 620, 96) disposed in the path of the tap-waveguide (44, 16, 88) such that the portion of the optical signal diverted into the tap-waveguide (44, 16, 88) enters the tap receptacle (46, 20, 620, 96), the tap receptacle (46, 20, 620, 96) having a mouth proximate to an exterior surface of the variable optical attenuator; and
a light sensor (48, 24, 106) mounted proximate to the mouth of the tap receptacle (46, 20, 620, 96) for monitoring light that has entered the tap receptacle (46, 20, 620, 96).

2. The variable optical attenuator of claim 1, wherein the tap receptacle (46, 20, 96) has a reflective interior surface that scatters light that has entered the tap receptacle (46, 20, 96) from the tap waveguide (44, 16, 88) towards an active region (26, 108) of the light sensor (48, 24, 106).

3. The variable optical attenuator of claim 2, wherein a portion of the tap receptacle interior surface has deposited thereon a mirror (22, 98) for scattering light that has entered the tap receptacle (20, 96).

4. The variable optical attenuator of claim 2, wherein a portion of the tap receptacle interior surface has deposited thereon a grating (720) for scattering light that has entered the tap receptacle (620).

5. The variable optical attenuator of any preceding claim, wherein the tap receptacle (46, 20, 620) is filled with an infill material (32) having a refractive index matched to that of the tap-waveguide (44, 16, 40).

6. The variable optical attenuator of claim 5, wherein the material is a cured liquid glue for securing the light sensor (48, 24).

7. The variable optical attenuator of claim 5 or 6, wherein the tap receptacle comprises an elongated "Z"-shaped trough (420) having a circular cross-section body portion (20) underneath the light sensor (24) and a pair of opposed end portions (402, 404) disposed in-front of and behind the light sensor (24) for spreading the infill material (32) through the "Z"-shaped trough (420).

8. The variable optical attenuator of any preceding claim, wherein the tap receptacle (46, 20, 620) comprises a cavity.

9. A power equalizer (34) for equalizing signal levels among a plurality of optical waveguides, each carrying a respective separate optical signal, the power equalizer (34) comprising an array of variable optical attenuators (50) according to any preceding claim, the through-waveguide (40) of each variable optical attenuator in the array (50) being optically coupled to one of the plurality of optical waveguides.

10. The power equalizer of claim 9, further comprising a combiner (60) coupled to the optical waveguides after the array of variable optical attenuators (50) for combining the respective separate optical signals into a single signal.

11. The power equalizer of claim 9, further comprising a multiplexer coupled to the optical waveguides after the array of variable optical attenuators (50) for multiplexing the respective separate optical signals into a single, multiplexed signal.

12. The power equalizer of any of claims 9 to 11, further comprising a demultiplexer coupled to the optical waveguides before the array of variable optical attenuators (50) for demultiplexing a multiplexed input signal into separate, demultiplexed signals.

13. The power equalizer of any of claims 9 to 11, further comprising a splitter coupled to the optical waveguides before the array of variable optical attenuators (50) for splitting a single input signal into separate signals.

14. A method for manufacturing a variable optical attenuator, the method comprising the following steps:
(a) laying down an underclad layer (84) and a layer of waveguide material (86) onto a planar substrate (82);
(b) etching waveguides (88, 90, 92) into the waveguide material (86), the waveguides (88, 90, 92) including a through-waveguide and a tap-waveguide (88) optically coupled to the through-waveguide such that a portion of an optical signal carried by the through-waveguide is diverted into the tap-waveguide (88);
(c) laying down an overclad layer (94) on top of the waveguides (88, 90, 92);
(d) providing access to the tap-waveguide (88) by etching a tap receptacle (96) through the overclad layer (94) across the tap-waveguide (88), the tap receptacle (96) having an opening proximate to an exterior surface of the device, the tap receptacle (96) being disposed in the path of the tap-waveguide (88) such that the portion of the optical signal diverted into the tap-waveguide (88) enters the tap receptacle (96);
(e) mounting a light sensor (106) proximate to the opening of the tap receptacle (96) for sensing light that has entered the tap receptacle (96).

15. The method of claim 14, further including the following step (d1) between steps (d) and (e):
(d1) laying down a layer of reflective material within the tap receptacle to form a tap receptacle mirror (98) that scatters light entering the tap receptacle (96) towards the opening of the tap receptacle (96).

16. The method of claim 14 or 15, wherein in step (d), the tap receptacle (96) is formed using a wet etching technique.

17. The method of claim 16, wherein in step (d), the tap receptacle (96) is formed using a hydrofluoric acid (HF) wet etching technique to etch out a substantially circular cross-section.

## Patentansprüche

1. Variabler optischer Abschwächer, umfassend einen Durchgangswellenleiter (40) zum Führen eines optischen Signals, wobei der Durchgangswellenleiter ein Mach-Zehnder-Interferometer bildet, das obere und untere Arme (52, 54, 90, 92) aufweist, wobei zumindest einer der Arme des Mach-Zehnder-Interferometers ein Heizkissen (56, 100) aufweist, das in der Nähe dazu angebracht ist, um eine Phasen-Fehlanpassung zwischen den jeweiligen Teilen des optischen Signals, das durch die oberen und unteren Arme (52, 54, 90, 92) geführt wird, thermo-optisch zu induzieren, **gekennzeichnet durch**:
einen Anzapf-Wellenleiter (44, 16, 88), der an den Durchgangswellenleiter (40) gekoppelt ist, wobei der Anzapf-Wellenleiter (44, 16, 88) einen Teil des optischen Signals an eine Anzapf-Aufnahme (46, 20, 620, 96) divertiert, die in dem Pfad des Anzapf-Wellenleiters (44, 16, 88) angeordnet ist, derart, dass der Teil des optischen Signals, der in den Anzapf-Wellenleiter (44, 16, 88) divertiert ist, in die Anzapf-Aufnahme (46, 20, 620, 96) eintritt, wobei die Anzapf-Aufnahme (46, 20, 620, 96) eine Mündung in der Nähe einer äußeren Fläche des variablen optischen Abschwächers aufweist; und
einen Lichtsensor (48, 44, 106), der in der Nähe der Mündung der Anzapf-Aufnahme (46, 20, 620, 96) befestigt ist, um Licht aufzuzeichnen, das in die Anzapf-Aufnahme (46, 20, 620, 96) eingetreten ist.

2. Variabler optischer Abschwächer nach Anspruch 1, **dadurch gekennzeichnet, dass** die Anzapf-Aufnahme (46, 20, 96) eine reflektierende innere Fläche aufweist, die Licht, das in die Anzapf-Aufnahme (46, 20, 96) von dem Anzapf-Wellenleiter (44, 16, 88) eingetreten ist, zu einem aktiven Bereich (26, 108) des Lichtsensors (48, 24, 106) hin streut.

3. Variabler optischer Abschwächer nach Anspruch 2, **dadurch gekennzeichnet, dass** ein Teil der inneren Fläche des Anzapf-Aufnehmers darauf abgeschieden einen Spiegel (22, 98) zum Streuen von Licht aufweist, das in die Anzapf-Aufnahme (20, 96) eingetreten ist.

4. Variabler optischer Dämpfer nach Anspruch 2, **dadurch gekennzeichnet, dass** ein Teil der inneren Fläche der Anzapf-Aufnahme darauf abgeschieden ein Gitter (720) zum Streuen von Licht aufweist, das in die Anzapf-Aufnahme (620) eingetreten ist.

5. Variabler optischer Abschwächer nach einem voranstehenden Anspruch, **dadurch gekennzeichnet, dass** die Anzapf-Aufnahme (46, 20, 620) mit einem Füllmaterial (32) gefüllt ist, das einen Brechungsindex aufweist, der an jenen des Anzapfwellenleiters (44, 16, 40) angepasst ist.

6. Variabler optischer Abschwächer nach Anspruch 5, **dadurch gekennzeichnet, dass** das Material ein ausgehärteter Flüssigkleber zum Sichern des Lichtsensors (48, 24) ist.

7. Variabler optischer Abschwächer nach Anspruch 5 oder 6, **dadurch gekennzeichnet, dass** die Anzapf-Aufnahme eine längliche "Z"-förmige Mulde (420) umfasst, die ein Körperteil (20) von kreisförmigem Querschnitt unterhalb des Lichtsensors (24) und ein Paar von gegenüber liegenden Endteilen (402, 404) aufweist, die vor und hinter dem Lichtsensor (24) zum Spreizen des Füllmaterials (32) durch die "Z"-förmige Mulde (420) angeordnet sind.

8. Variabler optischer Abschwächer nach einem voranstehenden Anspruch, **dadurch gekennzeichnet, dass** die Anzapf-Aufnahme (46, 20, 620) eine Kavität umfasst.

9. Energie-Entzerrer (34) zum Entzerren von Signalpegeln unter einer Vielzahl optischer Wellenleiter, wobei jeder ein jeweiliges getrenntes optisches Signal führt, wobei der Energie-Entzerrer (34) ein Feld variabler optischer Abschwächer (50) gemäß einem voranstehenden Anspruch umfasst, wobei der Durchgangswellenleiter (40) jedes variablen optischen Abschwächers in dem Feld (50) optisch mit einer der Vielzahl von Wellenleitern gekoppelt ist.

10. Energie-Entzerrer nach Anspruch 9, weiter umfassend eine Kombinationseinheit (60), die mit den optischen Wellenleitern nach dem Feld variabler optischer Abschwächer (50) gekoppelt ist, um die jeweiligen getrennten optischen Signale in ein einziges Signal zu kombinieren.

11. Energieentzerrer nach Anspruch 9, weiter umfassend einen Multiplexer, der mit den optischen Wellenleitern nach dem Feld der variablen optischen Abschwächer (50) gekoppelt ist, um die jeweiligen getrennten optischen Signale in ein einziges multiplexiertes Signal zu multiplexieren.

12. Energieentzerrer nach einem der Ansprüche 9 bis 11, weiter umfassend einen Demultiplexer, der mit den optischen Wellenleitern vor dem Feld der variablen optischen Abschwächer (50) gekoppelt ist, um ein multiplexiertes Eingangssignal in getrennte, demultiplexierte Signale zu demultiplexieren.

13. Energieentzerrer nach einem der Ansprüche 9 bis 11, weiter umfassend einen Teiler, der mit den optischen Wellenleitern vor dem Feld der variablen optischen Abschwächer (50) gekoppelt ist, um ein einziges Eingangssignal in getrennte Signale zu teilen.

14. Verfahren zum Herstellen eines variablen optischen Abschwächers, wobei das Verfahren die folgenden Schritte umfasst:
a) Abscheiden einer Unterkleidungsschicht (84) und einer Schicht eines Wellenleitermaterials (86) auf einem planaren Substrat (82);
b) Ätzen von Wellenleitern (88, 90, 92) in das Wellenleitermatial (86), wobei die Wellenleiter (88, 90, 92) einen Durchgangswellenleiter und einen Anzapf-Wellenleiter, der optisch an den Durchgangswellenleiter derart gekoppelt ist, dass ein Teil eines optischen Signals, das durch den Durchgangswellenleiter geführt wird, in dem Anzapf-Wellenleiter (88) divertiert wird, einschließen;
c) Abscheiden einer Überkleidungsschicht (94) auf die Wellenleiter (88, 90, 92);
d) Bereitstellen eines Zugangs zu dem Anzapf-Wellenleiter (88) durch ein Ätzen einer Anzapf-Aufnahme (96) durch die Überkleidungsschicht (94) über dem Anzapf-Wellenleiter (88), wobei die Anzapf-Aufnahme (96) eine Öffnung in der Nähe einer äußeren Fläche der Vorrichtung aufweist, wobei die Anzapf-Aufnahme (96) in dem Pfad des Anzapf-Wellenleiters (88) derart angeordnet ist, dass der Teil des optischen Signals, der in den Anzapf-Wellenleiter (88) divertiert wird, in die Anzapf-Aufnahme (96) eintritt;
e) Anbringen eines Lichtsensors (106) in der Nähe der Öffnung der Anzapf-Aufnahme (96) zum Erfassen von Licht, das in die Anzapf-Aufnahme (96) eingetreten ist.

15. Verfahren nach Anspruch 14, weiter einschließend den folgenden Schritt (d1) zwischen den Schritten (d) und (e):
(d1) Abscheiden einer Schicht eines reflektierenden Materials innerhalb der Anzapf-Aufnahme, um einen Anzapf-Aufnahmespiegel (98) zu bilden, der Licht, das in die Anzapf-Aufnahme (96) eintritt, zu der Öffnung der Anzapf-Aufnahme (96) hin streut.

16. Verfahren nach Anspruch 14 oder 15, **dadurch gekennzeichnet, dass** in dem Schritt (d) die Anzapf-Aufnahme (96) unter Verwendung einer Nassätztechnik gebildet wird.

17. Verfahren nach Anspruch 16, **dadurch gekennzeichnet, dass** in dem Schritt in (d) die Anzapf-Aufnahme (96) unter Verwendung einer Fluorwasserstoffsäuren-(HF-) Nassätztechnik gebildet wird, um einen im wesentlichen kreisförmigen Querschnitt herauszuätzen.

## Revendications

1. Atténuateur optique variable comprenant un guide d'ondes de traversée (40) pour transporter un signal optique, le guide d'ondes de traversée formant un interféromètre de Mach-Zehnder qui comporte des bras supérieur et inférieur (52, 54, 90, 92), au moins l'un des bras de l'interféromètre de Mach-Zehnder comportant un plot de chauffage (56, 100) qui est monté à proximité de lui afin d'induire thermo-optiquement une désadaptation de phase entre les parties respectives du signal optique qui est transporté par les bras supérieur et inférieur (52, 54, 90, 92), **caractérisé par** :
un guide d'ondes de connexion intermédiaire (44, 16, 88) qui est couplé au guide d'ondes de traversée (40), le guide d'ondes de connexion intermédiaire (44, 16, 88) dérivant une partie du signal optique sur un réceptacle de connexion intermédiaire (46, 20, 620, 96) qui est disposé dans la voie du guide d'ondes de connexion intermédiaire (44, 16, 88) de telle sorte que la partie du signal optique qui est dérivée dans le guide d'ondes de connexion intermédiaire (44, 16, 88) entre dans le réceptacle de connexion intermédiaire (46, 20, 620, 96), le réceptacle de connexion intermédiaire (46, 20, 620, 96) comportant une embouchure à proximité d'une surface extérieure de l'atténuateur optique variable ; et
un capteur de lumière (48, 24, 106) qui est monté à proximité de l'embouchure du réceptacle de connexion intermédiaire (46, 20, 620, 96) pour surveiller une lumière qui est entrée dans le réceptacle de connexion intermédiaire (46, 20, 620, 96).

2. Atténuateur optique variable selon la revendication 1, dans lequel le réceptacle de connexion intermédiaire (46, 20, 96) comporte une surface intérieure réfléchissante qui diffuse la lumière qui est entrée dans le réceptacle de connexion intermédiaire (46, 20, 96) depuis le guide d'ondes de connexion intermédiaire (44, 16, 88) en direction d'une région active (26, 108) du capteur de lumière (48, 24, 106).

3. Atténuateur optique variable selon la revendication 2, dans lequel une partie de la surface intérieure du réceptacle de connexion intermédiaire comporte, déposé sur elle, un miroir (22, 98) pour diffuser une lumière qui est entrée dans le réceptacle de connexion intermédiaire (20, 96).

4. Atténuateur optique variable selon la revendication 2, dans lequel une partie de la surface intérieure du réceptacle de connexion intermédiaire comporte, déposé sur elle, un réseau de diffraction (720) pour diffuser une lumière qui est entrée dans le réceptacle de connexion intermédiaire (620).

5. Atténuateur optique variable selon l'une quelconque des revendications précédentes, dans lequel le réceptacle de connexion intermédiaire (46, 20, 620) est rempli d'un matériau de remplissage (32) qui présente un indice de réfraction qui est adapté à celui du guide d'ondes de connexion intermédiaire (44, 16, 40).

6. Atténuateur optique variable selon la revendication 5, dans lequel le matériau est une colle liquide durcie pour fixer le capteur de lumière (48, 24).

7. Atténuateur optique variable selon la revendication 5 ou 6, dans lequel le réceptacle de connexion intermédiaire comprend un chenal en forme de "Z" allongé (420) qui comporte une partie de corps de section en coupe circulaire (20) au-dessous du capteur de lumière (24) et une paire de parties d'extrémité opposées (402, 404) qui sont disposées à l'avant du capteur de lumière (24) et derrière celui-ci pour étaler le matériau de remplissage (32) au travers du chenal en forme de "Z" (420).

8. Atténuateur optique variable selon l'une quelconque des revendications précédentes, dans lequel le réceptacle de connexion intermédiaire (46, 20, 620) comprend une cavité.

9. Egaliseur de puissance (34) pour égaliser des niveaux de signal parmi une pluralité de guides d'ondes optiques, chacun transportant un signal optique séparé respectif, l'égaliseur de puissance (34) comprenant un réseau d'atténuateurs optiques variables (50) selon l'une quelconque des revendications précédentes, le guide d'ondes de traversée (40) de chaque atténuateur optique variable dans le réseau (50) étant couplé optiquement à l'un de la pluralité de guides d'ondes optiques.

10. Egaliseur de puissance selon la revendication 9, comprenant en outre un combineur (60) qui est couplé aux guides d'ondes optiques après le réseau d'atténuateurs optiques variables (50) pour combiner les signaux optiques séparés respectifs selon un unique signal.

11. Egaliseur de puissance selon la revendication 9, comprenant en outre un multiplexeur qui est couplé aux guides d'ondes optiques après le réseau d'atténuateurs optiques variables (50) pour multiplexer les signaux optiques séparés respectifs selon un unique signal multiplexé.

12. Egaliseur de puissance selon l'une quelconque des revendications 9 à 11, comprenant en outre un démultiplexeur qui est couplé aux guides d'ondes optiques avant le réseau d'atténuateurs optiques variables (50) pour démultiplexer un signal d'entrée multiplexé selon des signaux démultiplexés séparés.

13. Egaliseur de puissance selon l'une quelconque des revendications 9 à 11, comprenant en outre un séparateur qui est couplé aux guides d'ondes optiques avant le réseau d'atténuateurs optiques variables (50) pour séparer un unique signal d'entrée selon des signaux séparés.

14. Procédé de fabrication d'un atténuateur optique variable, le procédé comprenant les étapes qui suivent :
(a) dépôt d'une couche de sous-gainage (84) et d'une couche de matériau de guide d'ondes (86) sur un substrat plan (82) ;
(b) gravure de guides d'ondes (88, 90, 92) dans le matériau de guide d'ondes (86), les guides d'ondes (88, 90, 92) incluant un guide d'ondes de traversée et un guide d'ondes de connexion intermédiaire (88) qui est couplé optiquement au guide d'ondes de traversée de telle sorte qu'une partie d'un signal optique qui est transporté par le guide d'ondes de traversée soit dérivée dans le guide d'ondes de connexion intermédiaire (88);
(c) dépôt d'une couche de sur-gainage (94) sur le sommet des guides d'ondes (88, 90, 92) ;
(d) réalisation d'un accès sur le guide d'ondes de connexion intermédiaire (88) en gravant un réceptacle de connexion intermédiaire (96) au travers de la couche de sur-gainage (94) sur le guide d'ondes de connexion intermédiaire (88), le réceptacle de connexion intermédiaire (96) comportant une ouverture à proximité d'une surface extérieure du dispositif, le réceptacle de connexion intermédiaire (96) étant disposé dans la voie du guide d'ondes de connexion intermédiaire (88) de telle sorte que la partie du signal optique qui est dérivée dans le guide d'ondes de connexion intermédiaire (88) entre dans le réceptacle de connexion intermédiaire (96) ; et
(e) montage d'un capteur de lumière (106) à proximité de l'ouverture du réceptacle de connexion intermédiaire (96) pour détecter une lumière qui est entrée dans le réceptacle de connexion intermédiaire (96).

15. Procédé selon la revendication 14, incluant en outre l'étape qui suit (d1) entre les étapes (d) et (e) :
(d1) dépôt d'une couche en un matériau réfléchissant à l'intérieur du réceptacle de connexion intermédiaire afin de former un miroir de réceptacle de connexion intermédiaire (98) qui diffuse la lumière qui entre dans le réceptacle de connexion intermédiaire (96) en direction de l'ouverture du réceptacle de connexion intermédiaire (96).

16. Procédé selon la revendication 14 ou 15, dans lequel, au niveau de l'étape (d), le réceptacle de connexion intermédiaire (96) est formé en utilisant une technique de gravure par voie humide.

17. Procédé selon la revendication 16, dans lequel, au niveau de l'étape (d), le réceptacle de connexion intermédiaire (96) est formé en utilisant une technique de gravure par voie humide par acide fluorhydrique (HF) pour enlever par gravure une section en coupe sensiblement circulaire.
